# EUROPÄISCHE PATENTSCHRIFT

(11) **EP 2 727 781 B1**
(45) Veröffentlichungstag und Bekanntmachung des Hinweises auf die Patenterteilung: **23.05.2018**
(21) Anmeldenummer: 13190121.7
(22) Anmeldetag: 24.10.2013
(51) Int. Cl.: B60T 1/04, B60T 1/06, F16D 65/00

(54) **Fahrzeug, insbesondere Schienenfahrzeug, mit einer Reibungsbremse und Verfahren zu dessen Betrieb**
Vehicle, in particular a railway vehicle, with a friction brake and method for operating the same
Véhicule, notamment véhicule ferroviaire, doté d'un frein à friction et son procédé de fonctionnement

(30) Priorität: 31.10.2012 DE 102012021382
(43) Veröffentlichungstag der Anmeldung: 07.05.2014
(73) Patentinhaber: Lubricant Consult GmbH, 63477 Maintal (DE)
(72) Erfinder: Zschächner, Wolfgang, 79369 Wyhl (DE); Engelke, Heiko, 63549 Ronneburg (DE)
(74) Vertreter: Wallinger, Michael

(56) Entgegenhaltungen:
- WO-A1-01/62562
- JP-A- H01 226 403

## Beschreibung

Die vorliegende Erfindung betrifft ein Fahrzeug gemäß dem, aus WO 01/62562 A bekannten Oberbegriff des Anspruchs 1. Ferner betrifft die vorliegende Erfindung ein Verfahren zum Betrieb eines Fahrzeugs.

Die Erfindung wird in Bezug auf Schienenfahrzeuge zur Personenbeförderung wie Fernzüge, Nahverkehrszüge, Trambahnen, U-Bahnen, Standseilbahnen und Jahrmarktsbahnen, beschrieben. Ein erfindungsgemäßes Fahrzeug kann allerdings auch ein anderes Schienenfahrzeug, insbesondere zum Güter- oder Förderguttransport, sein. Insbesondere ist die Erfindung zum Einsatz in Triebköpfen, Triebwagen, Lokomotiven und/oder nicht angetriebenen Waggons von oben genannten Schienenfahrzeugen geeignet und vorgesehen.

Ein erfindungsgemäßes Fahrzeug kann ebenso ein Straßenfahrzeug wie Fahrrad, Motorrad, Personenkraftwagen oder Lastkraftwagen, oder ein beliebiges anderes Fahrzeug mit einer Reibungsbremse sein.

In vielen Betriebssituationen solcher Fahrzeuge ist die Geräuschentwicklung durch Reibungsbremsen für die Insassen des Fahrzeugs und/oder für Personen, welche sich in der Umgebung des Fahrzeuges aufhalten, wie Passanten, Anwohner oder, beispielweise am Bahnsteig, wartende Personen, störend.

Die Aufgabe der Erfindung besteht darin, ein verbessertes Fahrzeug, insbesondere Schienenfahrzeug, mit einer Reibungsbremse zur Verfügung zu stellen, sowie ein Verfahren zu dessen Betrieb.

Diese Aufgabe wird durch ein Fahrzeug mit den Merkmalen des unabhängigen Anspruchs 1 gelöst. Anspruch 11 stellt eine Zuführeinrichtung zur Verwendung in einem solchen Fahrzeug unter Schutz, Anspruch 13 ein Verfahren zum Betrieb eines Fahrzeugs. Zu bevorzugende Weiterbildungen der Erfindung sind Gegenstand der abhängigen Ansprüche.

Das erfindungsgemäße Fahrzeug, insbesondere Schienenfahrzeug, weist wenigstens eine Reibungsbremse mit wenigstens einem mit einem Rad des Fahrzeugs rotierbaren Radreibpartner, wenigstens einem mit dem Fahrzeug verbundenen Bremsreibpartner, und wenigstens einer Andruckeinrichtung auf, welche vorgesehen ist, um diesen Radreibpartner und diesen Bremsreibpartner zum Abbremsen dieses Rades in eine Reibverbindung zu bringen, wobei diese Reibungsbremse eine Zuführeinrichtung aufweist, mittels welcher ein Friktionsmittel an einem Kontaktbereich zwischen diesem Radreibpartner und diesem Bremsreibpartner, insbesondere fließend oder sprühend, aufbringbar ist.

Insbesondere kann ein pastöses, gelartiges, solartiges oder flüssiges Friktionsmittel mittels dieser Zuführeinrichtung pur oder mit oder mittels einem Treibmittel wie luftbasiertem Gas oder wasserbasierter Flüssigkeit aufgebracht werden. Als Treibmittel kann auch ein Wassersprühstrahl mit Reinigerzusatz oder ein Öl-Luftgemisch verwendet werden. Insbesondere kann dieses Friktionsmittel an dem Kontaktbereich zwischen Radreibpartner und Bremsreibpartner mittelbar oder unmittelbar aufbringbar sein.

Dadurch kann insbesondere vorteilhafterweise die Entstehung von Geräuschen reduziert werden und gezielt die Lautstärke bzw. die Frequenz dieser Geräusche beeinflusst werden.

Dadurch kann auch vorteilhafterweise der Kontaktbereich zwischen den Reibpartnern der Reibungsbremse gekühlt werden.

Unter einem Laufwerk eines Fahrzeuges im Sinne der Erfindung ist insbesondere eine Einrichtung zu verstehen, in welcher die Einzelräder und/oder Radachsen des Schienenfahrzeuges um ihre Abrollrichtung drehbar gelagert sind. Häufig ist ein solches Laufwerk um eine Hochachse des Schienenfahrzeugs drehbar gelagert, insbesondere um eine Kurvenfahrt von Schienenfahrzeugen mit wenigstens zwei solchen Laufwerken zu unterstützen.

Im Sinne der Erfindung ist unter einer Reibungsbremse des Fahrzeugs insbesondere eine Bremseinrichtung zu verstehen, mittels welcher ein Rad, und damit mittelbar das zugehörige Fahrzeug, durch eine Reibverbindung abbremsbar ist. Dieses Abbremsen kann durch eine Reibverbindung zwischen einem mit dem Rad rotierbaren, insbesondere damit drehfest verbundenen, Radreibpartner und einem wenigstens drehfest am Fahrzeug oder am Schienenfahrzeug angeordneten Bremsreibpartner, erfolgen, wenn mittels einer Andruckeinrichtung ein Anpressdruck zwischen einem Radreibpartner und einem Bremsreibpartner aufgebracht wird.

Radreibpartner und Rad können im Sinne der Erfindung insbesondere auch integral ausgebildet sein. Insbesondere kann ein Rad, vorzugsweise eine Radlauffläche dieses Rades, als Radreibpartner einer Reibungsbremse im Sinne der Erfindung ausgebildet sein.

Unter einem Kontaktbereich ist im Sinne der Erfindung insbesondere ein Bereich zu verstehen, welcher durch die Fläche definiert ist, auf welcher sich ein Radreibpartner und ein Bremsreibpartner beim Abbremsen berühren.

Unter einer Zuführeinrichtung ist im Sinne der Erfindung insbesondere eine Einrichtung zu verstehen, mittels welcher ein Friktionsmittel aus einem Friktionsmittelspender, insbesondere über eine Friktionsmittelleitung, zu einem Friktionsmittelapplikator förderbar ist, und von dort aus an einem Kontaktbereich aufbringbar ist.

Gemäß der Erfindung weist dieses Friktionsmittel eine Vielzahl von Wirkpartikeln mit wenigstens einem metallischen Material zur Beeinflussung der Entstehung von Schwingungen bei Kontakt zwischen diesem Radreibpartner und diesem Bremsreibpartner und wenigstens ein Trägermaterial zur Aufnahme dieser Wirkpartikel auf.

Durch eine Verwendung metallischer Wirkpartikel kann insbesondere vorteilhafterweise die Entstehung von Schwingungen, welche im Bereich des menschlichen Gehörs liegen, bezüglich deren Amplitude bzw. Lautstärke reduziert werden und/oder bezüglich deren Frequenz beeinflusst werden, insbesondere derart, dass sie nicht mehr im Bereich des menschlichen Gehörs liegen.

Unter Wirkpartikeln sind im Sinne der Erfindung insbesondere Partikel zu verstehen, welche in alle Richtungen einen Durchmesser zwischen 0,5 Mikrometern und 200 Mikrometern aufweisen. Bevorzugt sind diese Wirkpartikel als Plättchen ausgebildet, wobei ein Anteil, insbesondere der überwiegende Anteil, dieser Plättchen sich in drei Richtungen, welche ein kartesisches Koordinatensystem aufspannen, 0,5-10 Mikrometer (Höhe) bzw. 1-100 Mikrometer (Breite) bzw. 10-200 Mikrometer (Länge), besonders bevorzugt 0,5-5 Mikrometer (Höhe) bzw. 1-20 Mikrometer (Breite) bzw. 20-100 Mikrometer (Länge), erstreckt.

Gemäß einer bevorzugten Weiterbildung ist wenigstens ein metallisches Material dieser Wirkpartikel aus einer Gruppe ausgewählt, die Aluminium, Eisen, Kupfer, Zink und Zinn enthält, sowie Legierungen bzw. Mischungen mit oder aus wenigstens zwei dieser Materialien.

Auch eine Verwendung von Calcium oder Beryllium kann vorgesehen sein, ebenso eine Verwendung von Magnesium.

Auch falls und insoweit einzelne metallische Elemente im vorherigen Absatz als reine Stoffe beschrieben sind, versteht sich die Angabe eines Metalls vorliegend insbesondere als so umfassend, dass auch alle Legierungen und Mischungen mit diesem Metall als Hauptbestandteil darin inbegriffen sind.

Durch eine Auswahl von Wirkpartikeln aus dieser Gruppe kann insbesondere vorteilhafterweise eine Zusammenstellung von Wirkpartikeln erreicht werden, welche auf bestimmte Anwendungsfälle angepasst ist.

Solche Anwendungsfälle können sich insbesondere durch unterschiedliche Werte für Parameter zur Witterung wie Einsatztemperatur oder Feuchtigkeit unterscheiden, aber auch durch unterschiedliche Werkstoffe eines Radreibpartners und/oder eines Bremsreibpartners.

Angaben von Werten einer dynamischen Viskosität eines bestimmten Materials oder Materialgemischs beziehen sich vorliegend insbesondere auf einen Temperaturbereich, der die auftretenden Umgebungstemperaturen und/oder Betriebstemperaturen beim Betrieb eines Schienenfahrzeugs im Sinne der Erfindung beinhaltet, vorzugsweise sind Viskositätswerte derart angegeben, dass sie bei mindestens einer Temperatur in einem Temperaturbereich zwischen -20°C und +30°C vorliegen, bevorzugt bei 25°C.

Insbesondere sind Werte dynamischer Viskositäten vorliegend bei im Wesentlichen identischen Temperaturverhältnissen aller zu vergleichenden Werte in Relation zueinander zu betrachten.

Gemäß einer bevorzugten Weiterbildung weist das Friktionsmittel wenigstens ein hochviskoses Trägermaterial, insbesondere mit einer dynamischen Viskosität von mindestens 100 mPa*s bzw. einer Konsistenz von kleiner 445 x 0,1mm, zur Aufnahme von Wirkpartikeln auf. Insbesondere ist das hochviskose Trägermaterial aus einer Gruppe ausgewählt, die mehrwertige Alkohole wie Glycerin oder Polyglycole, insbesondere Polyethylenglykol oder Polypropylenglycol, Gele wie Kieselgel, insbesondere silikatische Verdicker wie Bentonit, und Mischungen aus wenigstens zwei dieser Materialien enthält.

Durch die Beimengung eines hochviskosen Trägermaterials zu dem Friktionsmittel kann insbesondere vorteilhafterweise eine homogene und/oder gleichmäßige Verteilung der metallischen Wirkpartikel in dem Friktionsmittel sichergestellt werden. Insbesondere kann auch sichergestellt werden, dass eine homogene und/oder gleichmäßige Verteilung der metallischen Wirkpartikel über einen längeren Zeitraum, insbesondere wenigstens ein Jahr oder zwei oder mehrere Jahre, erhalten bleibt.

Vorzugsweise können metallische Wirkpartikel mittels eines Homogenisierungsverfahrens mit Walzenstühlen und/oder anderen geeigneten Blendingvorrichtungen in ein hochviskoses Trägermaterial einarbeitbar sein.

Unter einem hochviskosen Trägermaterial sind vorliegend insbesondere Stoffe oder Stoffgemische mit einer dynamischen Viskosität zu verstehen, welche wenigstens 100 mPa*s, vorzugsweise wenigstens 120 mPa*s, besonders bevorzugt 150 mPa*s beträgt. Auch Stoffe oder Stoffgemische mit einer wesentlich höheren dreistelligen oder vierstelligen dynamischen Viskosität (in mPa*s) können im Sinne der Erfindung als hochviskoses Trägermaterial verwendet werden.

Zur Verwendung als hochviskose Trägermaterialien sind insbesondere solche Materialien geeignet und vorgesehen, welche unter den Betriebsbedingungen des Fahrzeugs im Sinne der Erfindung nicht oder schwer brennbar, nicht oder wenig schmierend, biologisch schnell abbaubar und/oder ungiftig sind. Diese Kriterien gelten analog insbesondere auch für die bei einem verdampfen und/oder verbrennen des entsprechenden Materials entstehenden Rückstände.

Gemäß einer bevorzugten Weiterbildung weist das Friktionsmittel wenigstens ein niedrigviskoses Trägermaterial, insbesondere mit einer dynamischen Viskosität von weniger als 100 mPa*s, zur Beeinflussung der Aufbringbarkeit des Friktionsmittels auf. Insbesondere ist das niedrigviskose Trägermaterial aus einer Gruppe ausgewählt, die einwertige Alkohole wie Methanol, Ethanol, Propanol oder Butanol, mehrwertige Alkohole wie Glycol, ungesättigte Fettsäuren, Triester, Propylencarbonat, Wasser, pflanzliche Öle wie Sojaöl oder Leinöl, Silikonöle und Mischungen aus wenigstens zwei dieser Materialien enthält.

Insbesondere kann durch die Beimengung eines niedrigviskosen Trägermaterials zu dem Friktionsmittel eine Beeinflussung eines Aufbringverhaltens, insbesondere eines Fließ- und/oder Sprühverhaltens, des Friktionsmittels erreicht werden, welche insbesondere eine Anpassung an verschiedene Betriebsbedingungen ermöglicht.

Unter einem niedrigviskosen Trägermaterial sind vorliegend insbesondere Stoffe oder Stoffgemische mit einer dynamischen Viskosität zu verstehen, welche weniger als 100 mPa*s, vorzugsweise weniger als 50 mPa*s, besonders bevorzugt weniger als 10 mPa*s, beträgt.

Zur Verwendung als niedrigviskose Trägermaterialien sind insbesondere solche Materialien geeignet und vorgesehen, welche unter den Betriebsbedingungen des Fahrzeugs im Sinne der Erfindung nicht oder schwer brennbar, nicht oder wenig schmierend, biologisch schnell abbaubar und/oder ungiftig sind. Diese Kriterien gelten analog insbesondere auch für die bei einem verdampfen und/oder verbrennen des entsprechenden Materials entstehenden Rückstände.

Vorzugsweise ist das niedrigviskose Trägermaterial geeignet, mit einem hochviskosen Trägermaterial derart vermischt zu werden, dass ein gemischtes Trägermaterial mit einer homogenen Viskosität entsteht. Der Wert dieser Viskosität ergibt sich vorzugsweise insbesondere aus dem Wert der Viskosität des hochviskosen Trägermaterials, dem Wert der Viskosität des niedrigviskosen Trägermaterials und aus dem Mischverhältnis der beiden Trägermaterialien.

Gemäß einer bevorzugten Weiterbildung weist das Friktionsmittel im Wesentlichen die rheologischen Eigenschaften eines nicht-newtonschen Fluids und/oder eines viskoelastischen Gels auf.

Insbesondere kann dadurch eine vorbestimmte Einstellung eines Aufbringverhaltens, insbesondere eines Fließ- und/oder Sprühverhaltens, des Friktionsmittels erreicht werden, welche insbesondere eine Anpassung an verschiedene Betriebsbedingungen ermöglicht.

Gemäß einer bevorzugten Weiterbildung weist das Friktionsmittel metallische Wirkpartikel auf, deren Härte kleiner ist als die Härte der durch die Andruckeinrichtung, insbesondere beim Abbremsen dieses Rades, in Reibverbindung gebrachten Oberflächen von Radreibpartner und Bremsreibpartner. Insbesondere ist diese bevorzugte Weiterbildung zum Einsatz bei Reibungsbremsen vorgesehen, welche an keinem oder nur an einem von Radreibpartner und Bremsreibpartner einen Reibbelag zum Eingehen der Reibverbindung der Reibungsbremse aufweisen.

Dadurch kann insbesondere vorteilhafterweise ein Verschleiß der Oberflächen von Rad- und/oder Bremsreibpartner reduziert werden.

Gemäß einer bevorzugten Weiterbildung weist das Friktionsmittel metallische Wirkpartikel auf, deren Härte gleich oder größer ist als die Härte der durch die Andruckeinrichtung, insbesondere beim Abbremsen dieses Rades, in Reibverbindung gebrachten Oberflächen von Radreibpartner und Bremsreibpartner. Insbesondere ist diese bevorzugte Weiterbildung zum Einsatz bei Reibungsbremsen vorgesehen, welche an Radreibpartner und Bremsreibpartner jeweils einen Reibbelag zum Eingehen der Reibverbindung der Reibungsbremse aufweisen.

Dadurch kann insbesondere vorteilhafterweise die Entstehung von Geräuschen bezüglich einer Amplitude bzw. Lautstärke dieser Geräusche reduziert und/oder bezüglich einer Frequenz dieser Geräusche beeinflusst werden.

Unter in Reibverbindung gebrachten Oberflächen von Radreibpartner und Bremsreibpartner sind vorliegend insbesondere die kontaktierbaren Flächen von Radreibpartner und Bremsreibpartner zu verstehen.

Die für den Vergleich der Härten der metallischen Wirkpartikel und der Oberflächen von Radreibpartner und Bremsreibpartner herangezogenen Werte sind vorzugsweise alle mittels eines Härtemessverfahrens ermittelt, welches einen Vergleich der ermittelten Werte zulässt. Besonders bevorzugt sind jeweils alle Härtemesswerte mittels einem der Verfahren zur Messung der Härte nach Martens, Rockwell, Brinell, Vickers, Shore oder Mohs ermittelt.

Insbesondere um vorteilhafterweise ein kostengünstiges und/oder zuverlässiges und/oder einfaches Aufbringen des Friktionsmittels bereitstellen zu können, weist das Friktionsmittel gemäß einer bevorzugten Weiterbildung metallische Wirkpartikel aus Aluminium und/oder Kupfer sowie einen silikatischen Verdicker und wenigstens eine ungesättigte Fettsäure auf, wobei insbesondere wenigstens die Hälfte des Volumens des Friktionsmittel von dieser ungesättigten Fettsäure eingenommen wird, und insbesondere wenigstens ein Viertel von diesen metallischen Wirkpartikeln.

Vorzugsweise weist das Friktionsmittel sowohl Wirkpartikel aus einer Aluminiumlegierung als auch Wirkpartikel aus einer Kupferlegierung auf. Im Sinne dieser bevorzugten Weiterbildung kann das Friktionsmittel aber zusätzlich oder alternativ auch Wirkpartikel mit einer Legierung oder Verbindung mit Aluminium und Kupfer aufweisen.

Um insbesondere vorteilhafterweise eine dauerhafte, gleichmäßige Verteilung von metallischen Wirkpartikeln in dem Trägermaterial des Friktionsmittels zu erreichen, weist das Friktionsmittel gemäß einer bevorzugten Weiterbildung eine dynamische Viskosität von mehr als 100, vorzugsweise mehr als 120, besonders bevorzugt mehr als 150, mPa*s auf.

Im Sinne dieser bevorzugten Weiterbildung bezieht sich der Parameter dynamische Viskosität insbesondere auf eine Gesamtviskosität eines Friktionsmittels, welches ein hochviskoses Trägermaterial, ein niedrigviskoses Trägermaterial und/oder metallische Wirkpartikel aufweist.

Neben der dynamischen Viskosität wird in der praktischen Anwendung häufig die mittels eines Walkpenetrationstests ermittelte Konsistenz zur Ermittlung der Steifigkeit von Schmierstoffen bzw. Friktionsmitteln herangezogen.

Bei einem Walkpenetrationstest nach DIN ISO 2137 wird ein Kegel mit genormten Abmaßen auf das vorgewalkte Friktionsmittel (Temperatur 25°C) aufgesetzt und anschließend aus seiner Halterung gelöst, um senkrecht fünf Sekunden lang in das Friktionsmittel einzudringen. Der Wert für die Konsistenz ergibt sich aus der dabei erreichten Eindringtiefe in Vielfachen von 0,1mm.

Eine Eindringtiefe von 400-430 x 0,1mm entspricht gemäß einer Skala des National Lubricating Grease Institute (NLGI) einer Konsistenzklasse von "00". Höhere Werte der Eindringtiefe stehen für weichere bzw. flüssigere Friktionsmittel, niedrigere Werte für härtere bzw. festere Friktionsmittel.

Um insbesondere vorteilhafterweise eine dauerhafte, gleichmäßige Verteilung von metallischen Wirkpartikeln in dem Trägermaterial des Friktionsmittels zu erreichen, weist das Friktionsmittel gemäß einer bevorzugten Weiterbildung eine Konsistenz von kleiner als 445 x 0,1mm, insbesondere zwischen 400 x 0,1mm und 430 x 0,1mm, auf (gemäß Walkpenetrationstest nach DIN ISO 2137).

Insbesondere, um vorteilhafterweise ein in verschiedenen Einsatzbereichen einsetzbares Fahrzeug bereitstellen zu können, ist diese Reibungsbremse gemäß einer bevorzugten

Weiterbildung als Klotzbremse, Scheibenbremse oder Trommelbremse ausgebildet. Eine Keilbremse ist im Sinne der Erfindung insbesondere auch als Klotzbremse zu verstehen. Gemäß einer bevorzugten Weiterbildung ist mittels dieser Zuführeinrichtung beabstandet von dem Kontaktbereich Friktionsmittel auf einen kontaktierbaren Bereich dieses Bremsreibpartners oder auf einen kontaktierbaren Bereich dieses Radreibpartners aufbringbar, insbesondere in einem geöffneten Zustand dieser Reibungsbremse.

Dadurch kann insbesondere vorteilhafterweise erreicht werden, dass Friktionsmittel auch mittelbar aufbringbar ist, vorzugsweise wenn der (direkte) Kontaktbereich zwischen dem Bremsreibpartner und dem Radreibpartner zeitweise oder immer schwer oder nicht zugänglich ist.

Gemäß einem Aspekt der Erfindung weist eine Zuführeinrichtung zur Verwendung in einem Fahrzeug ein Friktionsmittel der oben genannten Art, wenigstens einen Friktionsmittelspender zur Bereitstellung von Friktionsmittel und wenigstens einen Friktionsmittelapplikator zum wenigstens mittelbaren Aufbringen von Friktionsmittel auf einen Kontaktbereich zwischen dem Radreibpartner und dem Bremsreibpartner dieses Rades auf.

Dadurch kann insbesondere vorteilhafterweise eine einfache und schnelle Möglichkeit der Versorgung einer Zuführeinrichtung mit Friktionsmittel ermöglicht werden. Vorzugsweise ist der Friktionsmittelspender als wechselbare Kartusche ausgebildet. Der Friktionsmittelapplikator kann im Sinne dieses Aspektes der Erfindung als mit der wechselbaren Kartusche auswechselbar ausgebildet sein. Ebenso kann der Friktionsmittelapplikator als Aufbringkopf, insbesondere Sprüh- oder Fließkopf, fahrzeugfest ausgebildet sein und eine Schnittstelle mit dem Friktionsmittelspender aufweisen.

Insbesondere, um eine kostengünstige Zuführeinrichtung für mehrere Bremsen bereitzustellen, weist gemäß einer bevorzugten Weiterbildung die Zuführeinrichtung wenigstens zwei mit demselben Friktionsmittelspender verbundene Friktionsmittelapplikatoren auf. Mittels jedem dieser Friktionsmittelapplikatoren ist an einer anderen dieser Reibungsbremsen eines oder verschiedener dieser Räder Friktionsmittel aufbringbar.

Bei einem erfindungsgemäßen Verfahren zum Betrieb eines Fahrzeugs, insbesondere Schienenfahrzeugs, werden die metallischen Wirkpartikel eines Friktionsmittels in einem Trägermaterial dieses Friktionsmittels gleichmäßig bzw. homogen verteilt.

Dieses Friktionsmittel wird aus einem Friktionsmittelspender einer fahrzeugfesten Zuführeinrichtung eines Fahrzeugs gefördert.

Dieses Friktionsmittel wird mittels eines Friktionsmittelapplikators dieser Zuführeinrichtung wenigstens mittelbar auf einen Kontaktbereich zwischen einem Radreibpartner und einem Bremsreibpartner einer Reibungsbremse dieses Fahrzeugs aufgebracht.

Mittels einer Andruckeinrichtung des Fahrzeugs werden dieser Radreibpartner und dieser Bremsreibpartner, insbesondere zum Abbremsen eines Rades des Fahrzeugs, in eine Reibverbindung gebracht.

Dadurch kann insbesondere vorteilhafterweise die Entstehung von Geräuschen bezüglich einer Amplitude bzw. Lautstärke dieser Geräusche reduziert und/oder bezüglich einer Frequenz dieser Geräusche beeinflusst werden.

Gemäß einer bevorzugten Weiterbildung des Verfahrens wird dieses Friktionsmittel mittels Aufsprühen und/oder Fließen an diesen Kontaktbereich aufgebracht.

Dadurch kann insbesondere vorteilhafterweise der Kontaktbereich zwischen den Reibpartnern der Reibungsbremse gekühlt werden.

Beispielhafte Ausführungen eines erfindungsgemäßen Fahrzeugs ergeben sich aus den nachfolgenden Beschreibungen in Zusammenhang mit den Figuren. Dabei zeigt im einzelnen - teilweise schematisch:
- Fig. 1:: einen Ausschnitt eines erfindungsgemäßen Schienenfahrzeugs mit einer beispielhaften Ausführung einer Zuführeinrichtung in einer Seitenansicht;
- Fig. 2:: einen Ausschnitt eines erfindungsgemäßen Schienenfahrzeugs mit einer beispielhaften Ausführung einer als Scheibenbremse ausgeführten Reibungsbremse in einer durch die in Fig. 1 eingezeichnete Ebene A-A verlaufenden Schnittansicht;
- Fig 3:: eine beispielhafte Ausführung eines Laufwerks eines erfindungsgemäßen Schienenfahrzeugs mit als Trommelbremsen ausgeführten Reibungsbremsen in einer durch die in Fig. 1 eingezeichnete Ebene B-B verlaufenden Schnittansicht;
- Fig. 4:: einen Ausschnitt eines erfindungsgemäßen Schienenfahrzeugs mit einer beispielhaften Ausführung einer als Klotzbremse ausgebildeten Reibungsbremse in einer Seitenansicht; und
- Fig. 5:: eine beispielhafte Ausführung eines erfindungsgemäßen Friktionsmittels in einer REM-Aufnahme.

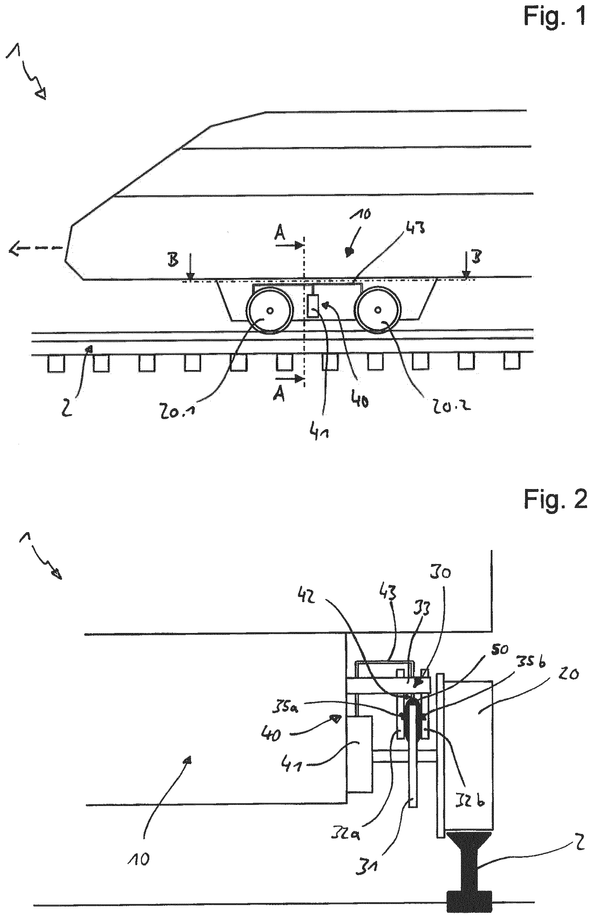

Fig. 1 zeigt einen Ausschnitt eines Schienenfahrzeugs 1 mit einer beispielhaften Ausführung einer erfindungsgemäßen Zuführeinrichtung 40 in einer Seitenansicht. Das Schienenfahrzeug 1 ist in dieser beispielhaften Ausführung als Waggon mit Triebkopf eines Fernverkehrszugs zur Personenbeförderung ausgebildet. Es bewegt sich in Richtung des in Fig. 1 eingezeichneten gestrichelten Pfeils vorwärts.

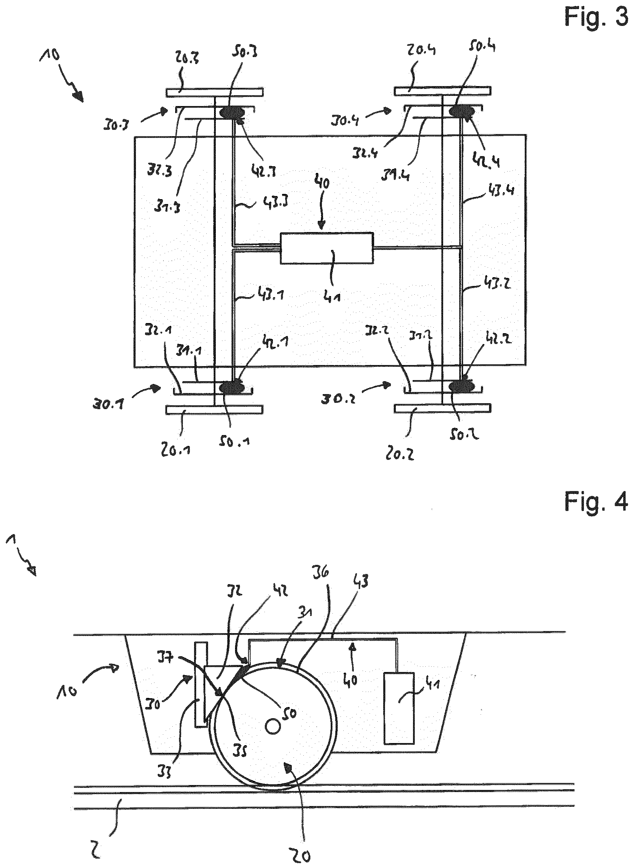

Zur Fortbewegung weist das Schienenfahrzeug 1 ein Laufwerk 10 mit vier Rädern 20.1, 20.2 (und zwei in Fig. 1 nicht dargestellte Räder 20.3, 20.4, siehe Fig. 3) auf, sowie ein weiteres, in Figur 1 nicht dargestelltes Laufwerk, auf. Dem Schienenfahrzeug 1 können weitere Waggons angekoppelt sein. Die Räder 20.1 und 20.2 des Laufwerks 10 rollen auf einer Schiene 2 ab, wobei sie Antriebskräfte des Schienenfahrzeugs 1 rotierend auf diese Schiene 2 übertragen können.

Zum Abbremsen des Schienenfahrzeugs 1 weist in dieser beispielhaften Ausführung jedes Rad 20 des Laufwerks 10 eine in Fig. 1 nicht dargestellte Reibungsbremse 30 auf, welche als Scheibenbremse (siehe Fig. 2), Trommelbremse (siehe Fig. 3) oder Klotzbremse (siehe Fig. 4) ausgebildet sein kann.

Fig. 2 und Fig. 3 zeigen unterschiedliche Ausführungsbeispiele, wobei sich diese beiden Ausführungsbeispiel voneinander insbesondere in der Art der verwendeten Reibungsbremsen unterscheiden. Um ein besseres Verständnis der Schnittansichten in den beiden Fig. 2 und 3 zu ermöglichen, sind in Fig. 1, welche keine Reibungsbremse selbst (bzw. nur eine Zuführeinrichtung 40 einer Reibungsbremse) zeigt, die Schnittebenen A-A bzw. B-B eingezeichnet.

Die in den Fig. 2-4 gezeigten Reibpartner sind aufgrund der deutlicheren, schematischen Darstellung ohne Reibbeläge dargestellt. Gleichwohl sind die die in den Fig. 2-4 beschriebenen Ausführungsbeispiele so zu verstehen, dass auch Reibpartner vorgesehen sein können, welche einen Reibbelag aufweisen, insbesondere an beiden Reibpartnern.

Fig. 2 zeigt einen Ausschnitt eines erfindungsgemäßen Schienenfahrzeugs 1 mit einer beispielhaften Ausführung einer als Scheibenbremse ausgeführten Reibungsbremse 30 in einer durch die in Fig. 1 eingezeichnete Ebene A-A verlaufenden Schnittansicht.

Die Scheibenbremse 30 weist einen Radreibpartner 31 und zwei als Bremsscheiben ausgebildete Bremsreibpartner 32a und 32b auf. Insbesondere, um einen Bremsvorgang einzuleiten, sind die beiden Bremsreibpartner 32a, 32b dazu eingerichtet, mittels einer Andruckeinrichtung 33, beispielsweise eines pneumatischen oder hydraulischen Aktors, aufeinander zu bewegt zu werden.

Wenn die beiden Bremsreibpartner 32a bzw. 32b auf ihrer jeweiligen Seite den Radreibpartner 31 berühren, können sie im jeweiligen Kontaktbereich 35a bzw. 35b zwischen Radreibpartner 31 und Bremsreibpartner 32a bzw. 32b eine Normalkraft und damit einen Anpressdruck aufbringen, welcher, insbesondere mittels Reibung, ein Abbremsen des Radreibpartner 31 zur Folge hat. Damit wird auch das Rad 20 und das Schienenfahrzeug 1 abgebremst.

Bei solchen Bremsvorgängen entstehen häufig Geräusche, wie beispielsweise lautes Kreischen oder Quietschen, aber auch andere Schwingungen. Mittels der Zuführeinrichtung 40 kann das Auftreten solcher Geräusche und/oder anderer Schwingungen reduziert werden.

Am Laufwerk 10 ist ein Friktionsmittelspender 41 angeordnet, welcher entweder kontinuierlich oder auf Basis von Steuersignalen Friktionsmittel 50 über eine Friktionsmittelleitung 43 zu einem Friktionsmittelapplikator 42 fördert.

Mittels dem Friktionsmittelapplikator 42 wird das Friktionsmittel 50 an den Kontaktbereichen 35a und 35b aufgebracht. Dabei bildet sich jeweils ein Film von Friktionsmittel 50.

Das Friktionsmittel 50 kann zeitlich abgestimmt mit einem Bremsvorgang, aber auch zeitlich unabhängig von Bremsvorgängen, aufgebracht werden.

Fig. 3 zeigt eine beispielhafte Ausführung eines Laufwerks 10 eines erfindungsgemäßen Schienenfahrzeugs 1 mit als Trommelbremsen ausgeführten Reibungsbremsen 30 in einer durch die in Fig. 1 eingezeichnete Ebene B-B verlaufenden Schnittansicht.

In dieser beispielhaften Ausführung ist ein Laufwerk 10 mit vier Rädern 20.1, 20.2, 20.3 bzw. 20.4 dargestellt, wobei diese Räder mittels der Trommelbremsen 30.1, 30.2, 30.3 bzw. 30.4 abbremsbar sind.

Mittels der Zuführeinrichtung 40 ist Friktionsmittel 50.1, 50.2, 50.3, 50.4 an die Kontaktbereiche zwischen den Radreibpartnern 31.1,31.2,31.3 bzw. 31.4 und den Bremsreibpartnern 32.1,32.2,32.3 bzw. 32.4 der Trommelbremsen 30.1, 30.2, 30.3 bzw. 30.4 aufbringbar.

Die Zuführeinrichtung 40 weist für alle vier Friktionsmittelapplikatoren 42.1, 42.2, 42.3 und 42.4 einen gemeinsamen, zentral an dem Laufwerk 10 angeordneten, Friktionsmittelspender 41 auf. Dadurch ist eine Einsparung an Kosten und/oder Gewicht der Zuführeinrichtung 40 zu erreichen.

Die Friktionsmittelleitungen 43.1 und 43.3 zur Versorgung der Friktionsmittelapplikatoren 42.1 und 42.3 zweigen separat von dem Friktionsmittelspender 41 ab. Die Friktionsmittelleitungen 43.2 und 43.4 zur Versorgung der Friktionsmittelapplikatoren 42.2 und 42.4 sind an dem Ausgang vom Friktionsmittelspender 41 integral ausgebildet und verzweigen sich erst stromabwärts.

In einer Weiterbildung dieser beispielhaften Ausführung ist eine Anordnung des Friktionsmittelspenders 41 seitlich an dem Laufwerk 10 vorgesehen, um eine erleichterte Zugänglichkeit bei einem Austausch des Friktionsmittelspenders sicherzustellen.

Fig. 4 zeigt einen Ausschnitt eines erfindungsgemäßen Schienenfahrzeugs 1 mit einer beispielhaften Ausführung einer als Klotzbremse ausgebildeten Reibungsbremse 30 in einer Seitenansicht.

An dem Rad 20 ist eine Klotzbremse 30 derart angeordnet, dass die mit der Schiene 2 in Kontakt stehende Lauffläche des Rades 20 als Radreibpartner 31 der Klotzbremse 30 ausgebildet ist. Der Bremsreibpartner 32 ist durch einen keilförmigen Klotz ausgebildet.

Mittels der Zuführeinrichtung 40 kann Friktionsmittel 50 dem Kontaktbereich 35 zwischen Radreibpartner 31 und Bremsreibpartner 32 zugeführt werden.

In dieser beispielhaften Ausführung ist eine mittelbare Zuführung zu dem Kontaktbereich 35 vorgesehen. Das Friktionsmittel 50 wird mittels des Friktionsmittelapplikators 42 an einer, von dem Kontaktbereich 35 beabstandeten Stelle der kontaktierbaren Fläche 36 des Bremsreibpartner 31 aufgebracht. Der Transport des Friktionsmittels 50 zu dem Kontaktbereich 35 und damit zu der kontaktierbaren Fläche 37 des Bremsreibpartners 32 erfolgt mittels der Rotation des Rades 20 entgegen dem Uhrzeigersinn (bei Bewegung des Schienenfahrzeugs 1 in linke Blattrichtung, sprich Vorwärtsfahrt).

Dadurch kann insbesondere eine Anordnung des Friktionsmittelapplikators 42 der Zuführeinrichtung 40 an ungünstigen und/oder schwer zugänglichen Einbaupositionen vermieden werden.

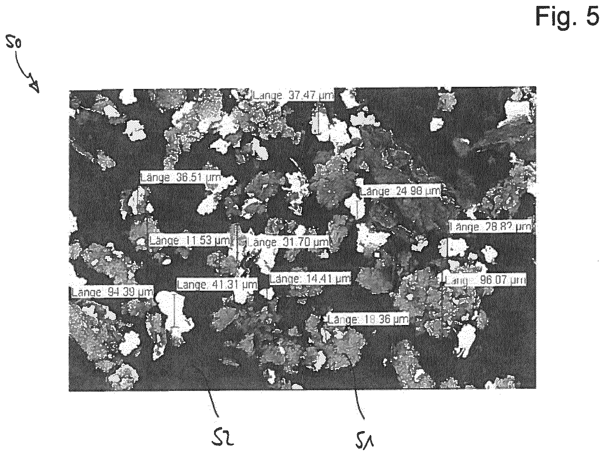

Fig. 5 zeigt eine beispielhafte Ausführung eines erfindungsgemäßen Friktionsmittels 50 in einer REM-Aufnahme. Das Trägermaterial 52 setzt weist in dieser beispielhaften Ausführung ungesättigte Fettsäuren, einen silikatischen Verdicker und Propylencarbonat auf, wobei alle Komponenten des Trägermaterials 52 homogen miteinander vermischt sind.

In dem Trägermaterial 52 sind metallische Wirkpartikel 51 unterschiedlicher Größe zwischen 0,5 und 200 Mikrometer homogen verteilt angeordnet, welche insbesondere im ungeförderten Zustand beispielsweise in einer Spenderkartusche, aufgrund der hohen Viskosität des als nicht-newtonsches Fluid vorliegenden Trägermaterials 52 im Wesentlichen ihre Position beibehalten.

In Figur 5 sind verschiedene Messwert der REM-Aufnahme für die Länge einzelner metallischer Wirkpartikel 51 eingetragen. Der Begriff Länge, wie er für Figur 5 verwendet wird, entspricht nicht der Verwendung des Begriffs Länge im allgemeinen Teil der Beschreibung, und kann hier sowohl Länge als auch Breite als auch Höhe bedeuten.

### Bezugszeichenliste

- 1: Schienenfahrzeug
- 2: Schiene

- 10: Laufwerk

- 20: Rad des Laufwerks

- 30: Reibungsbremse
- 31: Radreibpartner
- 32: Bremsreibpartner
- 33: Andruckeinrichtung
- 35: Kontaktbereich zwischen Radreibpartner und Bremsreibpartner
- 36: kontaktierbare Fläche des Radreibpartners
- 37: kontaktierbare Fläche des Bremsreibpartners

- 40: Zuführeinrichtung
- 41: Friktionsmittelspender
- 42: Friktionsmittelapplikator
- 43: Friktionsmittelleitung

- 50: Friktionsmittel
- 51: metallische Wirkpartikel
- 52: Trägermaterial

## Patentansprüche

1. Fahrzeug (1), insbesondere Schienenfahrzeug, aufweisend wenigstens eine Reibungsbremse (30) mit
- wenigstens einem mit einem Rad (20) des Fahrzeugs (1) rotierbaren Radreibpartner (31),
- wenigstens einem mit dem Fahrzeug (1) verbundenen Bremsreibpartner (32), und
- wenigstens einer Andruckeinrichtung (33), welche vorgesehen ist, um diesen Radreibpartner (31) und diesen Bremsreibpartner (32) zum Abbremsen dieses Rades (20) in eine Reibverbindung zu bringen,
wobei
diese Reibungsbremse (30) eine Zuführeinrichtung (40) aufweist, **dadurch gekennzeichnet, dass** die Reibungsbremse zudem ein Friktionsmittel (50) aufweist, welches mittels der Zuführeinrichtung an einem Kontaktbereich (35) zwischen dem Radreibpartner (31) und dem Bremsreibpartner (32), insbesondere fließend oder sprühend, aufbringbar ist, wobei dieses Friktionsmittel (50) eine Vielzahl von Wirkpartikeln (51) mit wenigstens einem metallischen Material zur Beeinflussung der Entstehung von Schwingungen bei Kontakt zwischen dem Radreibpartner (31) und dem Bremsreibpartner (32) und wenigstens ein Trägermaterial (52) zur Aufnahme dieser Wirkpartikel (51) aufweist.

2. Fahrzeug (1) gemäß Anspruch 1, wobei wenigstens ein metallisches Material dieser Wirkpartikel (51) aus einer Gruppe ausgewählt ist, die Aluminium, Calcium, Beryllium, Eisen, Kupfer, Zink, und Zinn sowie Legierungen bzw. Mischungen mit wenigstens zwei dieser Materialien enthält.

3. Fahrzeug (1) gemäß einem der vorherigen Ansprüche, wobei das Friktionsmittel wenigstens ein hochviskoses Trägermaterial (52) zur Aufnahme von Wirkpartikeln (51) aufweist, das insbesondere aus einer Gruppe ausgewählt ist, die
- mehrwertige Alkohole wie Glycerin oder Polyglycole,
- Polyethylenglykol,
- Polypropylenglycol,
- Gele wie Kieselgel, und
- Mischungen mit wenigstens zwei dieser Materialien
enthält.

4. Fahrzeug (1) gemäß einem der vorherigen Ansprüche, wobei das Friktionsmittel wenigstens ein niedrigviskoses Trägermaterial (52) zur Beeinflussung der Aufbringbarkeit des Friktionsmittels (51) aufweist, das insbesondere aus einer Gruppe ausgewählt ist, die
- einwertige Alkohole wie Methanol, Ethanol, Propanol oder Butanol,
- mehrwertige Alkohole wie Glycol,
- Wasser,
- pflanzliche Öl wie Sojaöl oder Leinöl,
- Silikonöle,
- Mischungen mit wenigstens zwei dieser Materialien
enthält.

5. Fahrzeug (1) gemäß einem der vorherigen Ansprüche, wobei das Friktionsmittel (50) im Wesentlichen die rheologischen Eigenschaften eines nicht-newtonschen Fluids und/oder eines viskoelastischen Gels aufweist.

6. Fahrzeug (1) gemäß einem der vorherigen Ansprüche, wobei das Friktionsmittel (50) metallische Wirkpartikel (51) aufweist, deren Härte kleiner als die Härte der durch die Andruckeinrichtung (33), insbesondere beim Abbremsen dieses Rades (20), in Reibverbindung gebrachten Oberflächen (36,37) von Radreibpartner (31) und Bremsreibpartner (32) ist.

7. Fahrzeug (1) gemäß einem der vorherigen Ansprüche, wobei das Friktionsmittel (50) metallische Wirkpartikel (51) aus Aluminium und/oder Kupfer sowie einen silikatischen Verdicker (52) und wenigstens eine ungesättigte Fettsäure (52) aufweist, wobei insbesondere wenigstens die Hälfte des Volumens des Friktionsmittels (50) von dieser ungesättigten Fettsäure eingenommen wird, und insbesondere wenigstens ein Viertel von diesen metallischen Wirkpartikeln (51).

8. Fahrzeug (1) gemäß einem der vorherigen Ansprüche, wobei das Friktionsmittel (50) eine Konsistenz von kleiner als 445 x 0,1mm aufweist.

9. Fahrzeug (1) gemäß einem der vorherigen Ansprüche, wobei diese Reibungsbremse (30) als Klotzbremse, Scheibenbremse oder Trommelbremse ausgebildet ist.

10. Fahrzeug (1) gemäß einem der vorherigen Ansprüche, wobei mittels dieser Zuführeinrichtung (40) beabstandet von dem Kontaktbereich (35) Friktionsmittel (50) auf einen kontaktierbaren Bereich (37) dieses Bremsreibpartners (32) oder auf einen kontaktierbaren Bereich (36) dieses Radreibpartners (31) aufbringbar ist, insbesondere in einem geöffneten Zustand dieser Reibungsbremse (30).

11. Zuführeinrichtung (40) zur Verwendung in einem Fahrzeug (1) gemäß einem der vorherigen Ansprüche, wobei
die Zuführeinrichtung (40) ein Friktionsmittel (50) mit den Merkmalen des im Anspruch 1 definierten Friktionsmittels, wenigstens einen Friktionsmittelspender (41) zur Bereitstellung von Friktionsmittel (50) und wenigstens einen Friktionsmittelapplikator (42) zum wenigstens mittelbaren Aufbringen von Friktionsmittel (50) auf einen Kontaktbereich (35) zwischen dem Radreibpartner (31) und dem Bremsreibpartner (32) dieses Rades (20) aufweist.

12. Zuführeinrichtung (40) gemäß dem vorherigen Anspruch, wobei die Zuführeinrichtung (40) wenigstens zwei mit demselben Friktionsmittelspender (41) verbundene Friktionsmittelapplikatoren (42) aufweist, und wobei mittels jedem dieser Friktionsmittelapplikatoren (42) an einer anderen dieser Reibungsbremsen (30) eines oder verschiedener Räder (20) Friktionsmittel (50) aufbringbar ist.

13. Verfahren zum Betrieb eines Fahrzeugs (1), insbesondere Schienenfahrzeugs, gemäß einem der Ansprüche 1 bis 10, wobei
- die metallischen Wirkpartikel (51) eines Friktionsmittels (50) mit den Merkmalen des im Anspruch 1 definierten Friktionsmittels in einem Trägermaterial (52) dieses Friktionsmittels (50) gleichmäßig verteilt werden, und
- dieses Friktionsmittel (50) aus einem Friktionsmittelspender (41) einer fahrzeugfesten Zuführeinrichtung (40) eines Fahrzeugs (1) gefördert wird, und
- dieses Friktionsmittel (50) mittels eines Friktionsmittelapplikators (42) dieser Zuführeinrichtung (40) wenigstens mittelbar auf einen Kontaktbereich (35) zwischen einem Radreibpartner (31) und einem Bremsreibpartner (32) einer Reibungsbremse (30) dieses Fahrzeugs (1) aufgebracht wird, und
- mittels einer Andruckeinrichtung (33) des Fahrzeugs (1) dieser Radreibpartner (31) und dieser Bremsreibpartner (32), insbesondere zum Abbremsen eines Rades (20) des Fahrzeugs (1), in eine Reibverbindung gebracht werden.

14. Verfahren gemäß dem vorherigen Anspruch, wobei
dieses Friktionsmittel (50) mittels Aufsprühen und/oder Fließen an diesen Kontaktbereich (35) aufgebracht wird.

## Claims

1. A vehicle (1), in particular a railway vehicle, having at least one friction brake (30) comprising
- at least one wheel friction surface (31) able to rotate with a wheel (20) of the vehicle (1),
- at least one brake friction surface (32) connected to the vehicle (1), and
- at least one pressure device (33), which is provided to bring said wheel friction surface (31) and said brake friction surface (32) into a frictional connection so as to brake said wheel (20),
wherein
said friction brake (30) comprises a feeder device (40),
**characterized in that** the friction brake additionally exhibits a friction agent (50) able to be applied, in particular fluidly or by spraying, to a contact region (35) between the wheel friction surface (31) and the brake friction surface (32) by means of the feeder device, wherein said friction agent (50) exhibits a plurality of active particles (51) comprising at least one metallic material to influence the generating of vibrations upon contact between the wheel friction surface (31) and the brake friction surface (32), and at least one carrier material (52) for accommodating said active particles (51).

2. The vehicle (1) according to claim 1, wherein
at least one metallic material of said active particles (51) is selected from among a group containing aluminum, calcium, beryllium, iron, copper, zinc and tin as well as alloys or respectively mixtures of at least two of said materials.

3. The vehicle (1) according to one of the preceding claims, wherein
the friction agent comprises at least one carrier material (52) of high viscosity for accommodating active particles (51), in particular selected from among a group containing
- multivalent alcohols such as glycerin or polyglycol,
- polyethylene glycol,
- polypropylene glycol,
- gels such as silica gel, and
- mixtures of at least two of these substances.

4. The vehicle (1) according to one of the preceding claims, wherein
the friction agent comprises at least one carrier material (52) of low viscosity to influence the applicability of the friction agent (51), in particular selected from among a group containing
- monovalent alcohols such as methanol, ethanol, propanol or butanol,
- multivalent alcohols such as glycerin,
- water,
- vegetable oil such as soybean oil or linseed oil,
- silicone oils,
- mixtures of at least two of these substances.

5. The vehicle (1) according to one of the preceding claims, wherein the friction agent (50) substantially has the rheological properties of a non-Newtonian fluid and/or a viscoelastic gel.

6. The vehicle (1) according to one of the preceding claims, wherein
the friction agent (50) comprises metallic active particles (51), the hardness of which is less than the hardness of the surfaces (36,37) of the wheel friction surface (31) and brake friction surface (32) frictionally connected by the pressure device (33), in particular when braking said wheel (20).

7. The vehicle (1) according to one of the preceding claims, wherein
the friction agent (50) comprises metallic active particles (51) of aluminum and/ or copper as well as a siliceous thickener (52) and at least one unsaturated fatty acid (52), wherein in particular at least half of the volume of the friction agent (50), and in particular at least one-fourth of said metallic active particles (51), is absorbed by said unsaturated fatty acid.

8. The vehicle (1) according to one of the preceding claims, wherein
the friction agent (50) has a consistency of less than 445 x 0.1 mm.

9. The vehicle (1) according to one of the preceding claims, wherein
said friction brake (30) is designed as a shoe brake, disc brake or drum brake.

10. The vehicle (1) according to one of the preceding claims, wherein
the friction agent (50) distanced from the contact regions (35) can be applied to a contactable region (37) of said brake friction surface (32) or to a contactable region (36) of said wheel friction surface (31) by means of said feeder device (40), in particular in an open state of said friction brake (30).

11. A feeder device (40) for use in a vehicle (1) according to one of the preceding claims, wherein
the feeder device (40) comprises a friction agent (50) having the features of the friction agent defined in claim 1, at least one friction agent dispenser (41) for supplying friction agent (50), and at least one friction agent applicator (42) for the at least indirect applying of friction agent (50) to a contact region (35) between the wheel friction surface (31) and the brake friction surface (32) of said wheel (20).

12. The feeder device (40) according to the preceding claim, wherein
the feeder device (40) comprises at least two friction agent applicators (42) connected by the same friction agent dispenser (41), and wherein friction agent (50) can be applied to a different one of said friction brakes (30) of one or more wheels (20) by each of said friction agent applicators (42).

13. A method for operating a vehicle (1), in particular a railway vehicle, according to one of claims 1 to 10, wherein
- the metallic active particles (51) of a friction agent (50) having the features of the friction agent defined in claim 1 are evenly distributed in a carrier material (52) of said friction agent (50), and
- said friction agent (50) is discharged from a friction agent dispenser (41) of a vehicle-mounted feeder device (40) of a vehicle (1), and
- said friction agent (50) can be applied at least indirectly on a contact region (35) between a wheel friction surface (31) and a brake friction surface (32) of a friction brake (30) of said vehicle (1) by a friction agent applicator (42) of said feeder device (40), and
- said wheel friction surface (31) and said brake friction surface (32) are brought into frictional connection by means of a pressure device (33) of the vehicle (1), in particular for braking a wheel (20) of the vehicle (1).

14. The method according to the preceding claim, wherein
said friction agent (50) is applied to said contact region (35) in a spray and/or flow.

## Revendications

1. Véhicule (1), en particulier véhicule sur rails, présentant au moins un frein à friction (30), comprenant
- au moins un élément de friction de roue (31) pouvant tourner avec une roue (20) du véhicule (1),
- au moins un élément de friction de frein (32) relié au véhicule (1), et
- au moins un dispositif de compression (33), qui est prévu afin d'amener ledit élément de friction de roue (31) et ledit élément de friction de frein (32) dans une liaison par friction afin de ralentir ladite roue (20), dans lequel
ledit frein à friction (30) présente un dispositif d'amenée (40), **caractérisé en ce que** le frein à friction présente en outre un agent de friction (50), qui peut être appliqué, en particulier par écoulement ou par aspersion, au moyen du dispositif d'amenée au niveau d'une zone de contact (35) entre l'élément de friction de roue (31) et l'élément de friction de frein (32), dans lequel
ledit agent de friction (50) présente une pluralité de particules actives (51) comprenant au moins un matériau métallique servant à influencer l'apparition d'oscillations lors du contact entre l'élément de fiction de roue (31) et l'élément de friction de frein (32) et au moins un matériau de support (52) servant à recevoir lesdites particules actives (51).

2. Véhicule (1) selon la revendication 1,
dans lequel
au moins un matériau métallique desdites particules actives (51) est choisi parmi un groupe, qui contient de l'aluminium, du calcium, du béryllium, du fer, du cuivre, du zinc et de l'étain ainsi que des alliages ou des mélanges comprenant au moins deux desdits matériaux.

3. Véhicule (1) selon l'une quelconque des revendications précédentes, dans lequel
l'agent de friction présente au moins un matériau de support (52) hautement visqueux servant à recevoir des particules actives (51), lequel est choisi en particulier parmi un groupe, qui contient
- des alcools polyvalents tels que de la glycérine ou des polyglycols,
- du polyéthylène glycol,
- du polypropylène glycol,
- des gels tels que du gel de silice, et
- des mélanges comprenant au moins deux desdits matériaux.

4. Véhicule (1) selon l'une quelconque des revendications précédentes, dans lequel
l'agent de friction présente au moins un matériau de support (52) faiblement visqueux servant à influencer l'aptitude d'application de l'agent de friction (51), lequel est choisi en particulier parmi un groupe, qui contient
- des alcools monovalents tels que le méthanol, l'éthanol, le propanol ou le butanol,
- des alcools polyvalents tels que le glycol,
- de l'eau,
- de l'huile végétale telle que de l'huile de soja ou de l'huile de lin,
- des huiles de silicone,
- des mélanges comprenant au moins deux desdits matériaux.

5. Véhicule (1) selon l'une quelconque des revendications précédentes, dans lequel l'agent de friction (50) présente sensiblement les propriétés rhéologiques d'un fluide non-Newtonien et/ou d'un gel viscoélastique.

6. Véhicule (1) selon l'une quelconque des revendications précédentes, dans lequel
l'agent de friction (50) présente des particules actives (51) métalliques, dont la dureté est inférieure à la dureté des surfaces (36, 37) de l'élément de friction de roue (31) et de l'élément de friction de frein (32) amenées dans une liaison par friction par le dispositif de compression (33), en particulier lors du ralentissement de ladite roue (20).

7. Véhicule (1) selon l'une quelconque des revendications précédentes, dans lequel
l'agent de friction (50) présente des particules actives (51) métalliques en aluminium et/ou en cuivre ainsi qu'un épaississant (52) siliceux et au moins un acide gras (52) insaturé, dans lequel en particulier au moins la moitié du volume de l'agent de friction (50) est absorbée par ledit acide gras insaturé et en particulier au moins un quart par lesdites particules actives (51) métalliques.

8. Véhicule (1) selon l'une quelconque des revendications précédentes, dans lequel
l'agent de friction (50) présente une consistance inférieure à 445 x 0,1 mm.

9. Véhicule (1) selon l'une quelconque des revendications précédentes, dans lequel
ledit frein à friction (30) est réalisé sous la forme d'un frein à sabot, d'un frein à disque ou d'un frein à tambour.

10. Véhicule (1) selon l'une quelconque des revendications précédentes, dans lequel
de l'agent de friction (50) peut être appliqué au moyen dudit dispositif d'amenée (40), à distance de la zone de contact (35), sur une zone (37), avec laquelle il est possible d'établir un contact, dudit élément de friction de frein (32) ou sur une zone, avec laquelle il est possible d'établir un contact, dudit élément de friction de roue (31), en particulier dans un état ouvert dudit frein à friction (30).

11. Dispositif d'amenée (40) destiné à être utilisé dans un véhicule (1) selon l'une quelconque des revendications précédentes, dans lequel
le dispositif d'amenée (40) présente un agent de friction (50) présentant les caractéristiques de l'agent de friction défini dans la revendication 1, au moins un distributeur d'agent de friction (41) servant à fournir de l'agent de friction (50) et au moins un applicateur d'agent de friction (42) servant à appliquer au moins indirectement de l'agent de friction (50) sur une zone de contact (35) entre l'élément de friction de roue (31) et l'élément de friction de frein (32) de ladite roue (20).

12. Dispositif d'amenée (40) selon la revendication précédente, dans lequel
le dispositif d'amenée (40) présente au moins deux applicateurs d'agent de friction (42) reliés au même distributeur d'agent de friction (41), et dans lequel de l'agent de friction (50) peut être appliqué au moyen de chacun desdits applicateurs d'agent de friction (42) au niveau d'un autre frein à friction desdits freins à friction (30) d'une roue ou de roues différentes (20).

13. Procédé pour l'opération d'un véhicule (1), en particulier un véhicule sur rails, selon l'une quelconque des revendications 1 à 10, dans lequel
- les particules actives (51) métalliques d'un agent de friction (50) présentant les caractéristiques de l'agent de friction défini dans la revendication 1 sont réparties uniformément dans un matériau de support (52) dudit agent de friction (50), et
- ledit agent de friction (50) est refoulé hors d'un distributeur d'agent de friction (41) d'un dispositif d'amenée (40) solidaire du véhicule d'un véhicule (1), et
- ledit agent de friction (50) est appliqué au moyen d'un applicateur d'agent de friction (42) dudit dispositif d'amenée (40) au moins indirectement sur une zone de contact (35) entre un élément de friction de roue (31) et un élément de friction de frein (32) d'un frein à friction (30) dudit véhicule (1), et
- ledit élément de friction de roue (31) et ledit élément de friction de frein (32) sont amenés dans une liaison par friction en particulier afin de ralentir une roue (20) du véhicule (1) au moyen d'un dispositif de compression (33) du véhicule (1).

14. Procédé selon la revendication précédente, dans lequel
ledit agent de friction (50) est appliqué au niveau de ladite zone de contact (35) au moyen d'une aspersion et/ou d'un écoulement.
